# EUROPÄISCHE PATENTSCHRIFT

(11) **EP 4 524 406 B1**
(45) Veröffentlichungstag und Bekanntmachung des Hinweises auf die Patenterteilung: **25.02.2026**
(21) Anmeldenummer: 24200047.9
(22) Anmeldetag: 12.09.2024
(51) Int. Cl.: F16B 5/01, F16B 13/14

(54) **KLEBEDÜBEL FÜR EINE LEICHTBAUPLATTE, LEICHTBAUPLATTE UND VERFAHREN ZUR MONTAGE EINES KLEBEDÜBELS IN EINE LEICHTBAUPLATTE**
ADHESIVE DOWEL FOR A LIGHTWEIGHT CONSTRUCTION BOARD, LIGHTWEIGHT CONSTRUCTION BOARD AND METHOD FOR MOUNTING AN ADHESIVE DOWEL IN A LIGHTWEIGHT CONSTRUCTION BOARD
CHEVILLE ADHÉSIVE POUR UN PANNEAU LÉGER, PANNEAU LÉGER ET PROCÉDÉ DE MONTAGE D'UNE CHEVILLE ADHÉSIVE DANS UN PANNEAU LÉGER

(30) Priorität: 13.09.2023 DE 102023124748
(43) Veröffentlichungstag der Anmeldung: 19.03.2025
(73) Patentinhaber: Hettich-Heinze GmbH & Co. KG, 32139 Spenge (DE)
(72) Erfinder: TREMMEL, Martin, 32657 Lemgo (DE)
(74) Vertreter: Specht, Peter

(56) Entgegenhaltungen:
- WO-A2-2008/125182
- DE-U1- 202008 013 067

## Beschreibung

Die vorliegende Erfindung betrifft einen Klebedübel gemäß dem Oberbegriff des Anspruchs 1.

Die Erfindung betrifft des Weiteren eine Leichtbauplatte mit einem Klebedübel sowie ein Verfahren zur Montage eines Klebedübels in eine Leichtbauplatte.

Derartige Klebedübel dienen der Schaffung eines Festpunkts/Anschraubpunktes in einer Leichtbauplatte. Solche Leichtbauplatten bestehen dabei im Wesentlichen aus zwei relativ festen Deckschichten und einem dazwischen liegenden weicheren Innenkern.

Ein gattungsgemäßer Klebedübel ist beispielsweise aus der DE 20 2008 013 067 U1 bekannt.

Nachteilig an dem gattungsgemäßen Klebedübel ist der relativ komplizierte Aufbau des dort beschriebenen mehrteiligen Klebedübels, was mit relativ hohen Fertigungskosten verbunden ist.

Aufgabe der vorliegenden Erfindung ist es, einen Klebedübel für eine Leichtbauplatte dahingehend weiterzuentwickeln, dass dieser relativ einfach im Aufbau ist und in einfacher Weise in eine Leichtbauplatte montierbar ist.

Die gestellten Aufgaben werden durch einen Klebedübel für eine Leichtbauplatte mit den Merkmalen des Anspruchs 1 gelöst.

Die Aufgabe wird auch durch eine Leichtbauplatte mit den Merkmalen des Anspruchs 13 sowie durch ein Verfahren zur Montage eines Klebedübels in eine Leichtbauplatte mit den Merkmalen des Anspruchs 17 gelöst.

Der erfindungsgemäße Klebedübel für eine Leichtbauplatte weist einen hohlzylinderförmigen Dübelkörper mit geschlossener Mantelfläche auf. Der Klebedübel weist des Weiteren eine sich von einer oberen Stirnfläche des Dübelkörpers bis zu einer unteren Stirnfläche des Dübelkörpers erstreckende Zentralbohrung zur Aufnahme einer Schraube sowie zum Einbringen eines Klebers auf.

Der Klebedübel weist des Weiteren mehrere von der Zentralbohrung ausgehende Verteilkanäle zur Weiterleitung des eingebrachten Klebers aus der Zentralbohrung auf sowie mehrere an die Verteilkanäle anschließende Austrittskanäle zur Weiterleitung des eingebrachten Klebers zur Außenseite des Dübelkörpers.

Der Klebedübel ist dabei einteilig ausgebildet.

Durch die Einteiligkeit des erfindungsgemäßen Klebedübels ist ein einfach zu fertigender Klebedübel geschaffen, der darüber hinaus in einfacher Weise in einem Schritt in eine Sacklochbohrung einer Leichtbauplatte einsetzbar ist.

Die Zuführmöglichkeit des Klebers durch die Zentralbohrung ermöglicht ein einfaches Zuführen des Klebers an die dafür vorgesehenen Ausgänge des Klebedübels.

Vorteilhafte Ausführungsvarianten der Erfindung sind Gegenstand der Unteransprüche.

Gemäß einer vorteilhaften Ausführungsvariante sind die Verteilkanäle in eine untere Stirnfläche des Dübelkörpers eingebracht.

Das Einbringen solcher Verteilkanäle in die untere Stirnfläche des Dübelkörpers ist beispielsweise durch Einfräsen sehr einfach ermöglicht.

Gemäß einer weiteren vorteilhaften Ausführungsvariante ist nahe unterhalb der oberen Stirnfläche des Dübelkörpers wenigstens eine Aussparung in der Mantelfläche eingebracht, in die erste Austrittskanäle münden.

Die Aussparung in der Mantelfläche ermöglicht in einfacher Weise die Zuführung von Kleber in einen Bereich unmittelbar unterhalb der oberen Deckschicht der Leichtbauplatte.

Die Aussparung ist dabei gemäß einer vorteilhaften Weiterbildung als sich parallel zur oberen Stirnfläche des Dübelkörpers erstreckende Umfangsnut ausgebildet, was ebenfalls eine äußerst einfache Fertigung erlaubt.

Gemäß einer weiteren vorteilhaften Weiterbildung erstrecken sich die ersten Austrittskanäle parallel zur Zentralbohrung durch den Dübelkörper und können so in einfacher Weise durch Einbohren in die unter Stirnfläche in den Dübelkörper eingebracht werden.

Gemäß einer weiteren vorteilhaften Weiterbildung ist in der oberen Stirnfläche des Dübelkörpers wenigstens ein Loch eingebracht, das sich durch den Dübelkörper bis in die wenigstens eine Aussparung in der Mantelfläche erstreckt.

Dieses Loch ermöglicht es in äußerst einfacher Weise festzustellen, ob genügend Kleber in den Dübel eingebracht worden ist. Dies lässt sich in einfacher Weise dadurch erkennen, dass eine geringe Menge Kleber aus dem Loch oder den mehreren Löchern aus der Oberseite des Dübelkörpers austritt.

Die Löcher bewirken des Weiteren in vorteilhafter Weise eine Belüftung des in der Aussparung eingebrachten Klebers, um so ein Aushärten des Klebers zu beschleunigen.

Gemäß einer weiteren vorteilhaften Ausführungsvariante erstrecken sich die Verteilkanäle radial von der Zentralbohrung.

Gemäß einer weiteren vorteilhaften Ausführungsvariante schließen sich zweite Austrittskanäle radial außen an die Einmündung der ersten Austrittskanäle in die Verteilkanäle an, wobei ein Durchgangsquerschnitt der zweiten Austrittskanäle kleiner ist als ein Durchgangsquerschnitt der Verteilkanäle.

Die Verkleinerung des Durchgangsquerschnitts der zweiten Austrittskanäle ermöglicht in einfacher Weise den Eintritt von durch die Zentralbohrung eingebrachtem Kleber in die ersten Austrittskanäle.

Gemäß einer weiteren vorteilhaften Ausführungsvariante sind an einem der unteren Stirnfläche des Dübelkörpers nahen Bereich der Mantelfläche Kammern eingeformt, in die die zweiten Austrittskanäle münden.

Bevorzugt sind die Kammern in Umfangsrichtung des Dübelkörpers durch Stützstege voneinander getrennt.

Die Stützstege sorgen zum einen für eine stabile mechanische Abstützung des Dübelkörpers auf einer der unteren Stirnfläche des Dübelkörpers nahen Deckschicht der Leichtbauplatte sowie zum anderen für eine mittige und senkrecht zur Leichtbauplatte liegende Positionierung.

In einer weiteren bevorzugten Ausführungsvariante besteht der Dübelkörper aus einem nachhaltigen Faserverbundmaterial.

Dies hat insbesondere bei Fertigung auch der Leichtbauplatte aus einem nachhaltigen Faserverbundmaterial den Vorteil einer nachhaltigen Entsorgung, da in diesem Fall die Leichtbauplatte inklusive des Klebedübels aus dem gleichen Material bestehen.

Die Verwendung des Faserverbundmaterials hat den weiteren Vorteil, dass anstelle eines teuren Spezialklebers, beispielsweise eines kostengünstigen Weißleims, zur Verklebung des Klebedübels mit der Leichtbauplatte eingesetzt werden kann.

Die erfindungsgemäße Leichtbauplatte mit einer ersten Deckschicht und einer zweiten Deckschicht sowie einem die Deckschichten miteinander verbindenden Innenkern und wenigstens einem zum Verschrauben eines Möbelbeschlags an den Deckplatten verklebten Klebedübel, der in einer durch die erste Deckschicht und den Innenkern in der zweiten Deckschicht endenden Sacklochbohrung eingesetzt ist, weist wenigstens einen Klebedübel auf, der in der oben beschriebenen Weise ausgebildet ist.

In einer vorteilhaften Ausführungsvariante sind sowohl die Deckschichten als auch der Innenkern der Leichtbauplatte aus einem nachhaltigen Faserverbundmaterial gefertigt und weiter ist auch der wenigstens eine Klebedübel aus dem gleichen Faserverbundmaterial gefertigt wie die Leichtbauplatte, was den oben genannten Vorteil mit sich bringt.

Gemäß einer weiteren Ausgestaltung der erfindungsgemäßen Leichtbauplatte grenzt die Aussparung in der Mantelfläche des Dübelkörpers nahe unterhalb der oberen Stirnfläche des Dübelkörpers im in die Leichtbauplatte eingesetzten Zustand des Klebedübels unmittelbar an eine dem Innenkern zugewandte Innenseite der ersten Deckschicht an und ermöglicht so ein zuverlässiges Zuführen von Kleber an die Unterseite der ersten Deckschicht zur zuverlässigen Verklebung des Klebedübels mit der ersten Deckschicht.

In einer weiteren bevorzugten Ausführungsvariante grenzen die Kammern in der Mantelfläche des Dübelkörpers im in die Leichtbauplatte eingesetzten Zustand des Klebedübels unmittelbar an eine dem Innenkern zugewandte Innenseite der zweiten Deckschicht an.

Dies ermöglicht ein zuverlässiges Verkleben des Klebedübels an der zweiten Deckschicht, da die untere Stirnfläche des Dübelkörpers unmittelbar auf der geringfügig eingefrästen zweiten Deckschicht aufliegt.

Das erfindungsgemäße Verfahren zur Montage eines Klebedübels in eine Leichtbauplatte weist die folgenden Verfahrensschritte auf:
- Bohren einer Sacklochbohrung durch die erste Deckschicht und den Innenkern bis in die dem Innenkern zugewandte Innenseite der zweiten Deckschicht,
- Einstecken des Klebedübels in die Sacklochbohrung,
- Einfüllen eines Klebers in die Zentralbohrung des Klebedübels, bis der Kleber sowohl die Kammern in der Mantelfläche des Dübelkörpers als auch die wenigstens eine Aussparung in der Mantelfläche des Dübelkörpers nahe unterhalb der oberen Stirnfläche des Dübelkörpers ausfüllt und
- Aushärtenlassen des Klebers.

Im Folgenden werden bevorzugte Ausführungsbeispiele der Erfindung anhand der beiliegenden Zeichnungen näher erläutert. Es zeigen:
- Figur 1: eine schematische isometrische Darstellung einer Ausführungsvariante eines erfindungsgemäßen Klebedübels,
- Figur 2: eine weitere schematische isometrische Darstellung des in Figur 1 gezeigten Klebedübels aus einer anderen Perspektive,
- Figur 3: eine Seitenansicht des in den Figuren 1 und 2 gezeigten Klebedübels,
- Figur 4: eine Draufsicht auf eine untere Stirnfläche des Dübelkörpers,
- Figur 5: eine Schnittansicht entlang einer vertikalen Schnittebene durch den in den Figuren 1 und 2 gezeigten Klebedübel,
- Figur 6: eine schematische isometrische Darstellung einer Leichtbauplatte mit darin angeordnetem Klebedübel,
- Figur 7: eine schematische Querschnittsansicht durch die Leichtbauplatte mit darin eingesetztem Klebedübel,
- Figur 8: eine der Figur 6 entsprechende isometrische schematische Darstellung der Leichtbauplatte mit darin eingesetztem Klebedübel und in den Klebedübel eingesetzter Schraube und
- Figur 9: eine der Figur 7 entsprechende Querschnittsansicht durch die Leichtbauplatte mit in den Klebedübel eingesetzter Schraube.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Klebedübels, der Leichtbauplatte, Dübelkörper, Zentralbohrung, Verteilkanäle, Austrittskanäle und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

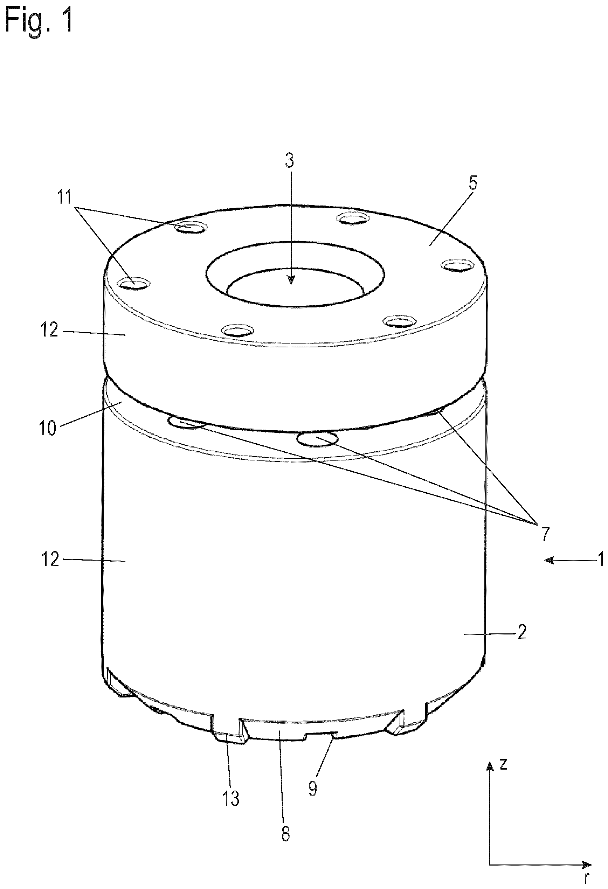

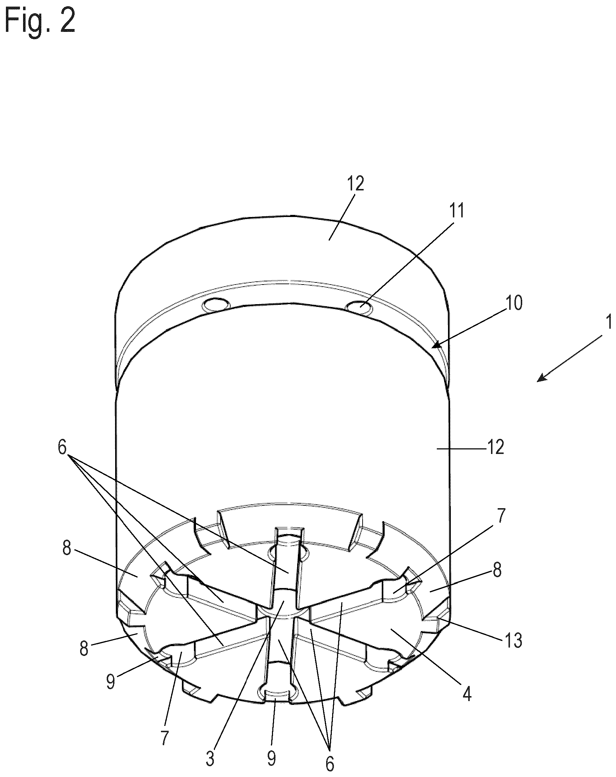

In den Figuren 1 und 2 ist mit dem Bezugszeichen 1 insgesamt eine Ausführungsvariante eines erfindungsgemäßen Klebedübels bezeichnet.

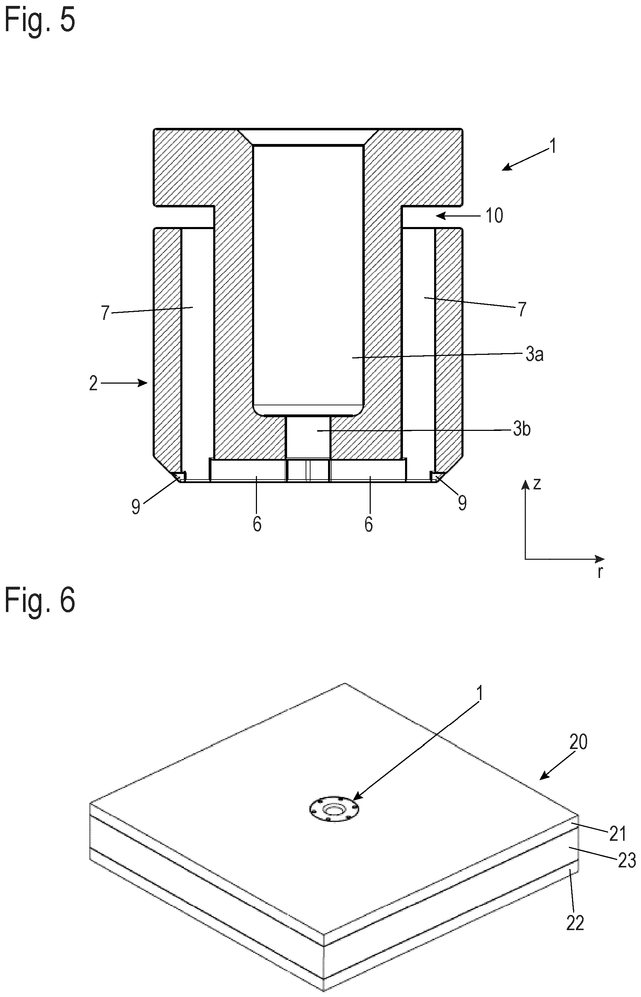

Der Klebedübel 1 dient der Schaffung eines Anschraubpunktes in einer Leichtbauplatte 20, wie es beispielhaft in Figur 6 dargestellt ist.

Wie in den Figuren 1 und 2 dargestellt ist, weist der Klebedübel 1 einen hohlzylinderförmigen Dübelkörper 2 mit geschlossener Mantelfläche 12 auf.

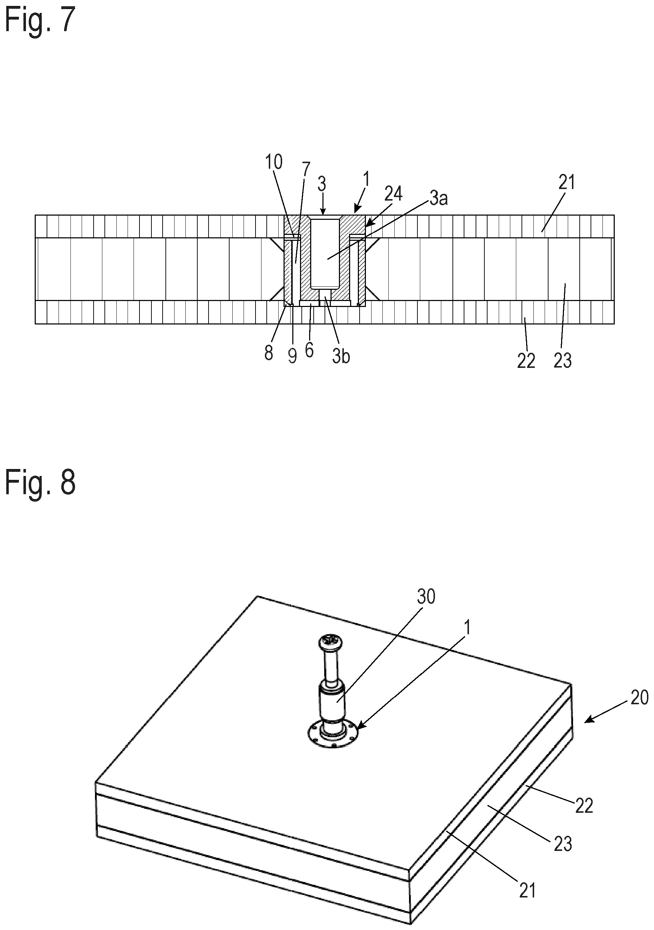

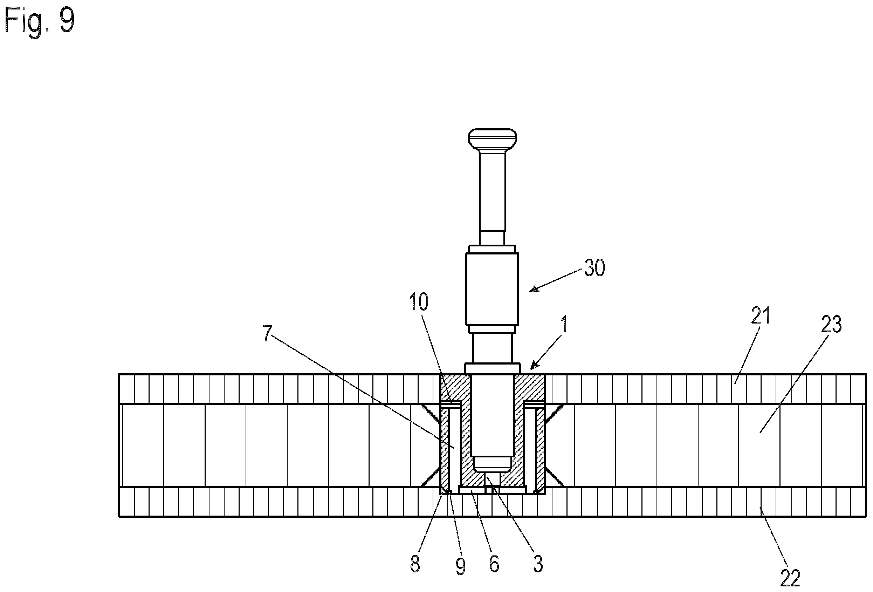

Zur Aufnahme eines Befestigungselementes 30, bevorzugt einer Schraube, wie es beispielhaft in den Figuren 8 und 9 dargestellt ist, weist der Klebedübel 1 eine sich von einer oberen Stirnfläche 5 des Dübelkörpers 2 bis zu einer unteren Stirnfläche 4 des Dübelkörpers 2 erstreckende Zentralbohrung 3 auf.

Diese Zentralbohrung 3 weist, wie in Figur 5 dargestellt ist, im gezeigten Ausführungsbeispiel eine sich von der oberen Stirnfläche 5 in den Dübelkörper 2 vertikal in einer Richtung z erstreckende Schraubenaufnahme 3a und einen sich an die Schraubenaufnahme 3a anschließenden, bis zur unteren Stirnfläche 4 reichenden Kleberkanal 3b mit gegenüber einem Bohrungsquerschnitt der Schraubenaufnahme 3a reduziertem Durchgangsquerschnitt auf.

Der Klebedübel 1 weist des Weiteren mehrere von der Zentralbohrung 3 ausgehende Verteilkanäle 6 zur Weiterleitung des eingebrachten Klebers aus der Zentralbohrung 3 auf, wie es gut in den Figuren 2, 4 und 5 dargestellt ist.

An diese Verteilkanäle 6 schließen sich Austrittskanäle 7, 9 an, die der Weiterleitung des eingebrachten Klebers zur Außenseite des Dübelkörpers 2 dienen.

Der Klebedübel 1 ist dabei insgesamt im Gegensatz zu dem aus dem Stand der Technik bekannten Klebedübel einteilig ausgebildet.

Die Verteilkanäle 6 sind, wie in den Figuren 2, 4 und 5 gut zu erkennen ist, bevorzugt in die untere Stirnfläche 4 des Dübelkörpers 2 eingebracht, so dass eine Verklebung des Dübelkörpers 2 mit der Leichtbauplatte 20 bereits im Bereich der unteren Stirnfläche 4 des Dübelkörpers 2 stattfinden kann.

Die Verteilkanäle 6 erstrecken sich dabei bevorzugt radial von der Zentralbohrung 3 in Richtung der Mantelfläche 12 des Dübelkörpers 2.

Erste Austrittskanäle 7 der Austrittskanäle 7, 9 erstrecken sich, wie es in Figur 5 gut zu erkennen ist, parallel auf einem radial versetztem Teilkreis zur Zentralbohrung 3 durch den Dübelkörper 2.

Die ersten Austrittskanäle 7 verbinden dabei die Verteilkanäle 6 in vertikaler Richtung z nach oben mit einer nahe unterhalb der oberen Stirnfläche 5 des Dübelkörpers 2 vorgesehenen, sich radial in einer Richtung r nach innen, d.h. in Richtung der Zentralbohrung 3 erstreckende Aussparung 10 in der Mantelfläche 12 des Dübelkörpers 2.

Diese Aussparung 10 ist dabei vorzugsweise als sich parallel zur oberen Stirnfläche 5 des Dübelkörpers 2 erstreckende U-förmige Umfangsnut ausgebildet.

Die Leichtbauplatte 20 besteht vorzugsweise aus einer ersten Deckschicht 21 und einer zweiten Deckschicht 22 sowie einem die Deckschichten 21, 22 miteinander verbindenden Innenkern 23 und wenigstens einem zum Verschrauben eines Möbelbeschlags an den Deckplatten 21, 22 verklebten Klebedübel 1, der in einer durch die erste Deckschicht 21 und den Innenkern 23 in der zweiten Deckschicht 22 endenden Sacklochbohrung 24 eingesetzt ist.

Die Position der Aussparung 10 ist dabei so gewählt, dass, wie in den Figuren 7 und 9 gut zu erkennen ist, die Aussparung 10 unmittelbar an die dem Innenkern 23 der Leichtbauplatte 20 zugewandten Innenseite der ersten Deckschicht 21 der Leichtbauplatte 20 angrenzt, um so den Klebedübel 1 mit der (in den Figuren 7 und 9 oberen) ersten Deckschicht 21 zu verkleben.

Die zweiten Austrittskanäle 9 erstrecken sich, wie in Figur 2, Figur 4 und Figur 5 gut zu erkennen ist, bevorzugt in radialer Verlängerung der Verteilkanäle 6 von der Einmündung der ersten Austrittskanäle 7 weiter radial nach außen.

Wie in Figur 5 gezeigt ist, ist dabei der Durchgangsquerschnitt dieser zweiten Austrittskanäle 9 kleiner als ein Durchgangsquerschnitt der Verteilkanäle 6.

Bei der hier gezeigten Ausführungsvariante ist die vertikale Tiefe der Verteilkanäle 6 deutlich größer als die vertikale Tiefe der zweiten Austrittskanäle 9.

Dies bewirkt, dass beim Einspritzen des Klebers ein Anteil der Klebermenge, die durch die Verteilkanäle 6 gedrückt wird, aufgrund des reduzierten Querschnitts der zweiten Austrittskanäle 9 in die ersten Austrittskanäle 7 gedrückt wird und so in die Aussparung 10 gelangt. Dadurch ist ermöglicht, eine hinreichende Menge an Kleber auch zur oberen Deckschicht 21 zu führen, um so eine Verklebung des Klebedübels 1 auch mit der oberen Deckschicht 21 zu gewährleisten.

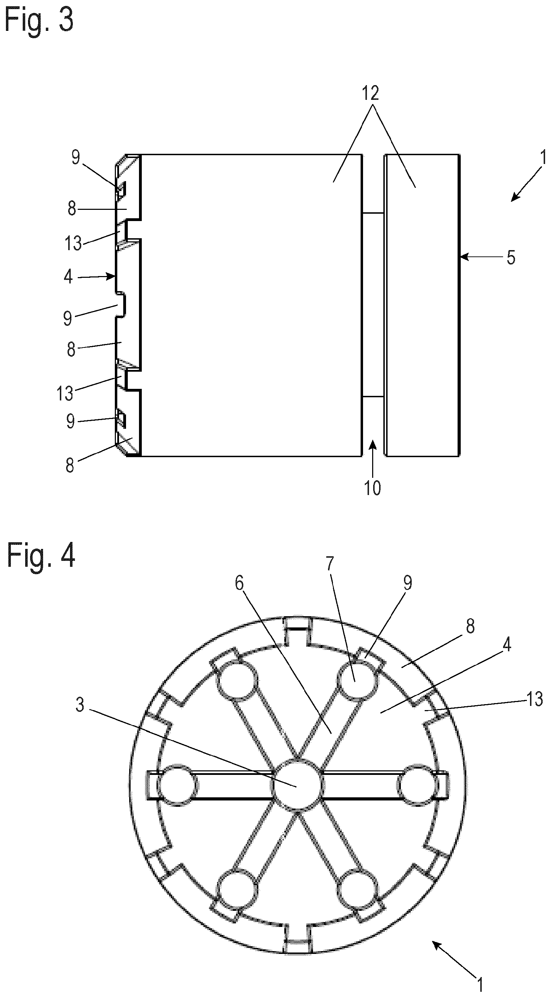

Die zweiten Austrittskanäle 9 münden, wie weiter in den Figuren 2 und 4 dargestellt ist, bevorzugt in durch Stützstege 13 in Umfangsrichtung voneinander getrennte Kammern 8, die am Übergang zwischen der Mantelfläche 12 des Dübelkörpers 2 und der unteren Stirnfläche 4 angeformt sind.

Die Kammern 8 in der Mantelfläche 12 des Dübelkörpers 2 grenzen im in die Leichtbauplatte 20 eingesetzten Zustand des Klebedübels 1, wie es in den Figu-ren 7 und 9 dargestellt ist, unmittelbar an eine dem Innenkern 23 zugewandte Innenseite der zweiten Deckschicht 22 an.

Der in die Kammern 8 geleitete Kleber sorgt so für eine umfängliche Verklebung des Klebedübels 1 auf der unteren Deckschicht 22 und weiterhin für eine exakte Positionierung des Klebedübels 1 innerhalb der Leichtbauplatte.

Die Stützstege 13 sorgen dabei für eine mechanische Abstützung des Klebedübels 1 auf der unteren Deckschicht 22.

Um in einfacher Weise erkennen zu können, dass eine genügend große Menge an Kleber in den Klebedübel 1 eingespritzt wurde, sind von der oberen Stirnfläche 5 des Dübelkörpers 2 her mehrere Löcher 11 oder wenigstens ein solches Loch 11 in den Dübelkörper 2 eingebracht.

Die Löcher 11 enden dabei in der Aussparung 10, so dass nach Einbringen des Klebers beim Füllen der Aussparung 10 mit Kleber ab einer bestimmten Menge an Kleber eine Teilmenge an Kleber durch das Loch 11 bzw. die Löcher 11 nach oben gedrückt wird und so in einfacher Weise erkennbar ist, dass eine hinreichende Menge an Kleber in den Klebedübel 1 eingefüllt wurde.

Die Löcher 11 in der oberen Stirnfläche 5 des Dübelkörpers 2 erfüllen dabei den weiteren Zweck der Entlüftung beim Aushärten des Klebers.

Zur Montage eines solchen Klebedübels 1 in einer Leichtbauplatte 20 werden bevorzugt die folgenden Verfahrensschritte durchgeführt:
Zunächst wird eine Sacklochbohrung 24 durch die erste Deckschicht 21 und den Innenkern 23 bis in die dem Innenkern 23 zugewandte Innenseite der zweiten Deckschicht 22 gebohrt.

Beim Bohren wird dabei die untere Deckschicht 22 leicht angefräst.

Danach wird der Klebedübel 1 in die Sacklochbohrung 24 in der Leichtbauplatte 20 eingesteckt.

Anschließend erfolgt ein Einfüllen des Klebers in die Zentralbohrung 3 des Klebedübels 1, bis der Kleber sowohl die Kammern 8 in der Mantelfläche 12 des Dübelkörpers 2 als auch die wenigstens eine Aussparung 10 in der Mantelfläche 12 des Dübelkörpers 2 nahe unterhalb der oberen Stirnfläche 5 des Dübelkörpers 2 ausfüllt.

Danach kann man den Kleber aushärten lassen.

In einer bevorzugten Ausführungsvariante besteht der Dübelkörper 2 aus einem nachhaltigen Faserverbundmaterial.

Weiter besteht bevorzugt auch die Leichtbauplatte 20, insbesondere die Deckschichten 21 und 22 und der Innenkern 23 der Leichtbauplatte 20 aus einem nachhaltigen Faserverbundmaterial.

Insbesondere die Kombination einer aus dem gleichen Faserverbundmaterial bestehenden Leichtbauplatte 20 und Klebedübel 1 ermöglicht eine Verbesserung der Entsorgung und Aufbereitung der eingesetzten Rohstoffe, weil keine Trennung der Materialien erfolgen muss.

Das nachhaltige Faserverbundmaterial besteht dabei bevorzugt aus einem biogenen Material, vorzugsweise überwiegend oder vollständig aus einem pflanzlichen Material, insbesondere einem gepressten Fasermaterial.

Das biogene Material kann hier beispielsweise Holzbestandteile, Kerne, Schalen, natürliche Polymere oder gepresste Fasermaterialien aufweisen.

Als Kleber wird, insbesondere vorteilhaft bei der Verwendung des Faserverbundmaterials, anstelle eines teuren Spezialklebers beispielsweise ein kostengünstiger Weißleim zur Verklebung des Klebedübels mit der Leichtbauplatte eingesetzt.

### Bezugszeichenliste

- 1: Klebedübel
- 2: Dübelkörper
- 3: Zentralbohrung
- 3a: Schraubenaufnahme
- 3b: Kleberkanal
- 4: Untere Stirnfläche
- 5: Obere Stirnfläche
- 6: Verteilkanal
- 7: Erster Austrittskanal
- 8: Kammer
- 9: Zweiter Austrittskanal
- 10: Aussparung
- 11: Loch
- 12: Mantelfläche
- 13: Stützsteg
- 20: Leichtbauplatte
- 21: Erste Deckschicht
- 22: Zweite Deckschicht
- 23: Innenkern
- 24: Sacklochbohrung
- 30: Befestigungselement

- r: Richtung
- z: Richtung

## Patentansprüche

1. Klebedübel (1) für eine Leichtbauplatte (20), aufweisend
- einen hohlzylinderförmigen Dübelkörper (2) mit geschlossener Mantelfläche (12),
- eine sich von einer oberen Stirnfläche (5) des Dübelkörpers (2) bis zu einer unteren Stirnfläche (4) des Dübelkörpers (2) erstreckende Zentralbohrung (3) zur Aufnahme eines Befestigungselementes (30) sowie zum Einbringen eines Klebers,
- mehrere von der Zentralbohrung (3) ausgehende Verteilkanäle (6) zur Weiterleitung des eingebrachten Klebers aus der Zentralbohrung (3),
- mehrere an die Verteilkanäle (6) anschließende Austrittskanäle (7, 9) zur Weiterleitung des eingebrachten Klebers zur Außenseite des Dübelkörpers (2),
**dadurch gekennzeichnet, dass**
- der Klebedübel (1) einteilig ausgebildet ist.

2. Klebedübel (1) nach Anspruch 1, **dadurch gekennzeichnet, dass** die Verteilkanäle (6) in eine untere Stirnfläche (4) des Dübelkörpers (2) eingebracht sind.

3. Klebedübel (1) nach Anspruch 1 oder 2, **dadurch gekennzeichnet, dass** nahe unterhalb der oberen Stirnfläche (5) des Dübelkörpers (2) wenigstens eine Aussparung (10) in der Mantelfläche (12) eingebracht ist, in die erste Austrittskanäle (7) münden.

4. Klebedübel nach Anspruch 3, **dadurch gekennzeichnet, dass** die Aussparung (10) als sich parallel zur oberen Stirnfläche (5) des Dübelkörpers (2) erstreckende Umfangsnut ausgebildet ist.

5. Klebedübel (1) nach Anspruch 3 oder 4, **dadurch gekennzeichnet, dass** die ersten Austrittskanäle (7) sich parallel zur Zentralbohrung (3) durch den Dübelkörper (2) erstrecken.

6. Klebedübel (1) nach einem der Ansprüche 3 bis 5, **dadurch gekennzeichnet, dass** in der oberen Stirnfläche (5) des Dübelkörpers (2) wenigstens ein Loch (11) eingebracht ist, das sich durch den Dübelkörper (2) bis in die wenigstens eine Aussparung (10) in der Mantelfläche (12) erstreckt.

7. Klebedübel (1) nach einem der vorhergehenden Ansprüche, **dadurch gekennzeichnet, dass** die Verteilkanäle (6) sich radial von der Zentralbohrung (3) erstrecken.

8. Klebedübel (1) nach einem der vorhergehenden Ansprüche, **dadurch gekennzeichnet, dass** zweite Austrittskanäle (9) sich radial außen an die Einmündung der ersten Austrittskanäle (7) in die Verteilkanäle (6) anschließen, wobei ein Durchgangsquerschnitt der zweiten Austrittskanäle (9) kleiner ist als ein Durchgangsquerschnitt der Verteilkanäle (6).

9. Klebedübel (1) nach Anspruch 8, **dadurch gekennzeichnet, dass** an einem der unteren Stirnfläche (4) des Dübelkörpers (2) nahen Bereich der Mantelfläche (12) Kammern (8) angeformt sind, in die die zweiten Austrittskanäle (9) münden.

10. Klebedübel (1) nach Anspruch 9, **dadurch gekennzeichnet, dass** die Kammern (8) in Umfangsrichtung des Dübelkörpers (2) durch Stützstege (13) voneinander getrennt sind.

11. Klebedübel (1) nach einem der vorhergehenden Ansprüche, **dadurch gekennzeichnet, dass** der Dübelkörper (2) aus einem nachhaltigen, biogenen Faserverbundmaterial besteht.

12. Klebedübel (1) nach einem der vorhergehenden Ansprüche, **dadurch gekennzeichnet, dass** der Kleber ein Weißleim ist.

13. Leichtbauplatte (20) mit einer ersten Deckschicht (21) und einer zweiten Deckschicht (22) sowie einem die Deckschichten (21, 22) miteinander verbindenden Innenkern (23) und wenigstens einem zum Verschrauben eines Möbelbeschlags an den Deckplatten (21, 22) verklebten Klebedübel (1), der in einer durch die erste Deckschicht (21) und den Innenkern (23) in der zweiten Deckschicht (22) endenden Sacklochbohrung (24) eingesetzt ist, **dadurch gekennzeichnet, dass** der wenigstens eine Klebedübel (1) gemäß einem der vorhergehenden Ansprüche ausgebildet ist.

14. Leichtbauplatte (20) nach Anspruch 13, **dadurch gekennzeichnet, dass** die Deckschichten (21, 22) und der Innenkern (23) der Leichtbauplatte (20) aus einem nachhaltigen, biogenen Faserverbundmaterial besteht und dass der wenigstens eine Klebedübel (1) aus dem gleichen Faserverbundmaterial besteht wie die Leichtbauplatte (20).

15. Leichtbauplatte (20) nach Anspruch 13 oder 14, **dadurch gekennzeichnet, dass** die Aussparung (10) in der Mantelfläche (12) des Dübelkörpers (2) nahe unterhalb der oberen Stirnfläche (5) des Dübelkörpers (2) im in die Leichtbauplatte (20) eingesetzten Zustand des Klebedübels (1) unmittelbar an eine dem Innenkern (23) zugewandten Innenseite der ersten Deckschicht (21) angrenzt.

16. Leichtbauplatte (20) nach einem der Ansprüche 13 bis 15, **dadurch gekennzeichnet, dass** die Kammern (8) in der Mantelfläche (12) des Dübelkörpers (2) im in die Leichtbauplatte (20) eingesetzten Zustand des Klebedübels (1) unmittelbar an eine dem Innenkern (23) zugewandten Innenseite der zweiten Deckschicht (22) angrenzt.

17. Verfahren zur Montage eines Klebedübels (1) in eine Leichtbauplatte (20) gemäß einem der Ansprüche 13 bis 16, mit den Verfahrensschritten:
- Bohren einer Sacklochbohrung (24) durch die erste Deckschicht (21) und den Innenkern (23) bis in die dem Innenkern (23) zugewandten Innenseite der zweiten Deckschicht (22),
- Einstecken des Klebedübels (1) von der ersten Deckschicht (21) her in die Sacklochbohrung (24),
- Einfüllen eines Klebers in die Zentralbohrung (3) des Klebedübels (1), bis der Kleber sowohl die Kammern (8) in der Mantelfläche (12) des Dübelkörpers (2) als auch die wenigstens eine Aussparung (10) in der Mantelfläche (12) des Dübelkörpers (2) nahe unterhalb der oberen Stirnfläche (5) des Dübelkörpers (2) ausfüllt,
- Aushärtenlassen des Klebers.

## Claims

1. Adhesive dowel (1) for a lightweight building board (20), comprising
- a hollow cylindrical dowel body (2) with a closed surface area (12),
- a central bore (3) extending from an upper front face (5) of the dowel body (2) to a lower front face (4) of the dowel body (2) for the reception of a fastening element (30) and for the introduction of an adhesive,
- several distribution channels (6) extending from the central bore (3) for forwarding the applied adhesive from the central bore (3),
- several outlet channels (7, 9) adjoining the distribution channels (6) for forwarding the adhesive applied to the outside of the dowel body (2),
**characterized in that**
- the adhesive dowel (1) is formed in one piece.

2. Adhesive dowel (1) according to claim 1, **characterized in that** the distribution channels (6) are introduced into a lower front face (4) of the dowel body (2).

3. Adhesive dowel (1) according to claim 1 or 2, **characterized in that** at least one recess (10) is provided in the lateral surface area (12) close below the upper front face (5) of the dowel body (2), into which first outlet channels (7) open.

4. Adhesive dowel according to claim 3, **characterized in that** the recess (10) is formed as a circumferential groove extending parallel to the upper front face (5) of the dowel body (2).

5. Adhesive dowel (1) according to claim 3 or 4, **characterized in that** the first outlet channels (7) extend parallel to the central bore (3) through the dowel body (2).

6. Adhesive dowel (1) according to one of claims 3 to 5, **characterized in that** at least one hole (11) is made in the upper front face (5) of the dowel body (2), which hole extends through the dowel body (2) into the at least one recess (10) in the lateral surface area (12).

7. Adhesive dowel (1) according to one of the preceding claims, **characterized in that** the distribution channels (6) extend radially from the central bore (3).

8. Adhesive dowel (1) according to one of the preceding claims, **characterized in that** second outlet channels (9) connect radially on the outside to the opening of the first outlet channels (7) into the distribution channels (6), a through-section of the second outlet channels (9) being smaller than a through-section of the distribution channels (6).

9. Adhesive dowel (1) according to claim 8, **characterized in that** chambers (8), into which the second outlet channels (9) open, are formed on a region of the lateral surface area (12) close to the lower front face (4) of the dowel body (2).

10. Adhesive dowel (1) according to claim 9, **characterized in that** the chambers (8) are separated from one another in the circumferential direction of the dowel body (2) by support webs (13).

11. Adhesive dowel (1) according to one of the preceding claims, **characterized in that** the dowel body (2) consists of a sustainable, biogenic fibre reinforced composite material.

12. Adhesive dowel (1) according to one of the preceding claims, **characterized in that** the adhesive is a white glue.

13. Lightweight building board (20) with a first cover layer (21) and a second cover layer (22) as well as an inner core (23) connecting the cover layers (21, 22) to one another and at least one adhesive dowel (1) glued to the cover layers (21, 22) for screwing a furniture fitting to the cover layers (21, 22), which is inserted in a blind hole drilling (24) ending through the first cover layer (21) and the inner core (23) in the second cover layer (22), **characterized in that** the at least one adhesive dowel (1) is formed according to one of the preceding claims.

14. Lightweight building board (20) according to claim 13, **characterized in that** the cover layers (21, 22) and the inner core (23) of the lightweight building board (20) consist of a sustainable, biogenic fibre reinforced composite material and **in that** the at least one adhesive dowel (1) consists of the same fibre reinforced composite material as the lightweight building board (20).

15. Lightweight building board (20) according to claim 13 or 14, **characterized in that** the recess (10) in the lateral surface area (12) of the dowel body (2) close below the upper front face (5) of the dowel body (2) is directly adjacent to an inner side of the first cover layer (21) facing the inner core (23) when the adhesive dowel (1) is inserted in the lightweight building board (20).

16. Lightweight building board (20) according to one of claims 13 to 15, **characterized in that** the chambers (8) in the lateral surface area (12) of the dowel body (2) are directly adjacent to an inner side of the second cover layer (22) facing the inner core (23) when the adhesive dowel (1) is inserted into the lightweight building board (20).

17. Method for mounting an adhesive dowel (1) into a lightweight building board (20) according to one of claims 13 to 16, with the method steps:
- Drilling a blind hole (24) through the first cover layer (21) and the inner core (23) up to the inner side of the second cover layer (22) facing towards toe inner core (23),
- Inserting the adhesive dowel (1) from the first cover layer (21) into the blind hole (24),
- Filling an adhesive into the central bore (3) of the adhesive dowel (1) until the adhesive fills the chambers (8) in the lateral surface area (12) of the dowel body (2) as well as the at least one recess (10) in the lateral surface area (12) of the dowel body (2) close below the upper front face (5) of the dowel body (2),
- Letting the adhesive harden.

## Revendications

1. Cheville adhésive (1) pour un panneau léger (20), comportant
- un corps de cheville (2) en forme de cylindre creux avec une surface d'enveloppe (12) fermée,
- un trou central (3) qui s'étend d'une face d'extrémité supérieure (5) du corps de cheville (2) à une face d'extrémité inférieure (4) du corps de cheville (2), destiné à recevoir un élément de fixation (30) et à l'introduction d'un adhésif,
- plusieurs canaux de distribution (6) partant du trou central (3), destinés à acheminer l'adhésif introduit à partir du trou central (3),
- plusieurs canaux de sortie (7, 9) faisant suite aux canaux de distribution (6), destinés à acheminer l'adhésif introduit vers la face extérieure du corps de cheville (2),
**caractérisée en ce que**
- la cheville adhésive (1) est conçue d'une pièce.

2. Cheville adhésive (1) selon la revendication 1, **caractérisée en ce que** les canaux de distribution (6) sont formés dans une face d'extrémité inférieure (4) du corps de cheville (2).

3. Cheville adhésive (1) selon la revendication 1 ou 2, **caractérisée en ce qu'**au moins un dégagement (10), dans lequel débouchent des premiers canaux de sortie (7), est formé dans la surface d'enveloppe (12) près de la face d'extrémité supérieure (5) du corps de cheville (2) et en dessous de celle-ci.

4. Cheville adhésive selon la revendication 3, **caractérisée en ce que** le dégagement (10) est conçu comme une rainure circonférentielle qui s'étend parallèlement à la face d'extrémité supérieure (5) du corps de cheville (2).

5. Cheville adhésive (1) selon la revendication 3 ou 4, **caractérisée en ce que** les premiers canaux de sortie (7) s'étendent parallèlement au trou central (3) à travers le corps de cheville (2).

6. Cheville adhésive (1) selon l'une des revendications 3 à 5, **caractérisée en ce qu'**est formé dans la face d'extrémité supérieure (5) du corps de cheville (2) au moins un trou (11) qui s'étend à travers le corps de cheville (2) jusqu'à l'au moins un dégagement (10) dans la surface d'enveloppe (12).

7. Cheville adhésive (1) selon l'une des revendications précédentes, **caractérisée en ce que** les canaux de distribution (6) s'étendent dans le sens radial à partir du trou central (3).

8. Cheville adhésive (1) selon l'une des revendications précédentes, **caractérisée en ce que** des deuxièmes canaux de sortie (9) se raccordent sur l'extérieur dans le sens radial au débouché des premiers canaux de sortie (7) aux canaux de distribution (6), une section de passage des deuxièmes canaux de sortie (9) étant plus petite que celle des canaux de distribution (6).

9. Cheville adhésive (1) selon la revendication 8, **caractérisée en ce que** des compartiments (8) dans lesquels débouchent les deuxièmes canaux de sortie (9) sont formés dans une zone de la surface d'enveloppe (12) proche de la face d'extrémité inférieure (4) du corps de cheville (2).

10. Cheville adhésive (1) selon la revendication 9, **caractérisée en ce que** les compartiments (8) sont séparés les uns des autres par des barrettes d'appui (13) dans le sens de la circonférence du corps de cheville (2).

11. Cheville adhésive (1) selon l'une des revendications précédentes, **caractérisée en ce que** le corps de cheville (2) se compose d'un matériau composite contenant des fibres durable et d'origine biologique.

12. Cheville adhésive (1) selon l'une des revendications précédentes, **caractérisée en ce que** l'adhésif est une colle blanche.

13. Panneau léger (20) avec une première couche de couverture (21) et une deuxième couche de couverture (22) ainsi qu'un noyau intérieur (23) reliant les couches de couverture (21, 22) l'une à l'autre et avec au moins une cheville adhésive (1) collée en vue du vissage d'une ferrure de meuble sur les panneaux de couverture (21, 22), qui est insérée à travers un trou borgne (24) qui traverse la première couche de couverture (21) et le noyau intérieur (23) et finit dans la deuxième couche de couverture (22), **caractérisé en ce que** l'au moins une cheville adhésive (1) est conçue selon l'une des revendications précédentes.

14. Panneau léger (20) selon la revendication 13, **caractérisé en ce que** les couches de couverture (21, 22) et le noyau intérieur (23) du panneau léger (20) se composent d'un matériau composite contenant des fibres durable et d'origine biologique et **en ce que** l'au moins une cheville adhésive (1) se compose du même matériau composite contenant des fibres que le panneau léger (20).

15. Panneau léger (20) selon la revendication 13 ou 14, **caractérisé en ce que** le dégagement (10) ménagé dans la surface d'enveloppe (12) du corps de cheville (2) près de la face d'extrémité supérieure (5) du corps de cheville (2) et en dessous de celle-ci est directement contigu, dans l'état inséré dans le panneau léger (20) de la cheville adhésive (1), d'une face intérieure de la première couche de couverture (21) tournée vers le noyau intérieur (23).

16. Panneau léger (20) selon l'une des revendications 13 à 15, **caractérisé en ce que** les compartiments (8) dans la surface d'enveloppe (12) du corps de cheville (2) sont directement contigus, dans l'état inséré dans le panneau léger (20) de la cheville adhésive (1), d'une face intérieure de la deuxième couche de couverture (22) tournée vers le noyau intérieur (23).

17. Procédé pour le montage d'une cheville adhésive (1) dans un panneau léger (20) selon l'une des revendications 13 à 16, comprenant les étapes de procédé suivantes :
- percer un trou borgne (24) à travers la première couche de couverture (21) et le noyau intérieur (23) jusqu'à la face intérieure de la deuxième couche de couverture (22) tournée vers le noyau intérieur (23),
- insérer la cheville adhésive (1) dans le trou borgne (24) à partir de la première couche de couverture (21),
- remplir le trou central (3) de la cheville adhésive (1) avec un adhésif jusqu'à ce que l'adhésif remplisse aussi bien les compartiments (8) dans la surface d'enveloppe (12) du corps de cheville (2) que l'au moins un dégagement (10) dans la surface d'enveloppe (12) du corps de cheville (2) près de la face d'extrémité supérieure (5) du corps de cheville (2) et en dessous de celle-ci,
- laisser prendre l'adhésif.
